# NEUE EUROPÄISCHE PATENTSCHRIFT

(11) **EP 1 298 374 B2**
(45) Veröffentlichungstag und Bekanntmachung des Hinweises auf die Entscheidung über den Einspruch: **24.08.2011**
(45) Hinweis auf die Patenterteilung: 09.11.2005
(21) Anmeldenummer: 01123423.4
(22) Anmeldetag: 28.09.2001
(51) Int. Cl.: F16L 23/032, F16L 23/12, F16L 23/10, F16L 23/08, F16L 23/06, F16L 23/04

(54) **Rohrsystem und Rohrschelle für ein Rohrsystem**
Pipe system and pipe clamp for a pipe system
Système de tuyaux et collier de serrage pour système de tuyaux

(43) Veröffentlichungstag der Anmeldung: 02.04.2003
(73) Patentinhaber: LBF Lufttechnik GmbH, 36341 Lauterbach (DE)
(72) Erfinder: Bührdel, Oskar, 36341 Lauterbach (DE)
(74) Vertreter: Böck, Bernhard

(56) Entgegenhaltungen:
- EP-A- 0 291 331
- EP-B1- 0 287 755
- WO-A1-96/07848
- US-A- 4 867 490
- US-A- 5 015 018
- US-A- 6 030 005
- US-A- 6 062 610
- US-A- 6 073 977
- US-A- 6 109 665
- 'Lindab Katalog "Ventilation 95" Seiten 5, 136 und 140'

## Beschreibung

Die Erfindung betrifft ein Rohrsystem aus zumindest zwei miteinander verbundenen, insbesondere relativ dünnwandigen Rohren, an deren eine Rohrverbindung bildenden Rohrenden jeweils ein Flansch angeformt ist, wobei zwei aneinander liegende Flansche miteinander mittels einer Rohrschelle verspannbar sind; ferner betrifft die Erfindung noch eine Rohrschelle für ein aus zwei miteinander verbundenen, insbesondere relativ dünnwandigen Rohren bestehendes Rohrsystem, an deren die Rohrverbindung bildenden Rohrenden jeweils ein Flansch angeformt ist.

Bei dünnwandigen Rohrsystemen, bei denen an die Dichtheit einer Rohrverbindung zuweilen nur geringe Ansprüche gestellt werden, sind einfache Steckverbindungen im Gebrauch, die keines großen Aufwandes bedürfen. Für höhere Betriebsdrücke sind sie aber nicht geeignet.

Die Rohre derartiger Rohrsysteme können stattdessen an ihren Rohrenden auch mit Bördelrändern versehen werden, wobei die aneinanderstoßenden Bördelränder eine Rohrverbindung bilden und dazu von einer Rohrschelle überfangen werden, welche die Dichtheit zu verbessern geeignet ist. Die Bördelränder können mit einer ebenen Dichtfläche ausgebildet oder als Rollrand ausgeführt sein; zwischengelegte Ringdichtungen verbessern die Dichtwirkung. Insgesamt werden diese Konstruktionen aber nur geringeren Anforderungen an die Leckrate solcher Rohrverbindungen gerecht. Die Rohrenden können trotz der Rohrschelle gegeneinander versetzt sein.

Aus der Patentschrift US 6,109,665 ist auch bereits bekannt, an den zu verbindenden Rohrenden spezielle Flansche anzubringen, an denen kegelige Dichtflächen ausgebildet sind, die mit einer übergreifenden, spannbaren Rohrschelle zusammenwirken, deren Dichtfläche zu denjenigen an den Flanschen etwa kongruent ausgeführt sind. Die in ihrem Ringquerschnitt etwa dreieckigen Flansche können aus Blech abgeformt und in die Rohre mittels einer Klemmverbindung, durch Punktschweißung, mittels Nieten oder in ähnlicher Weise befestigt sein. Obwohl Rohrverbindungen dieser Art einen erheblichen Aufwand für ihre Herstellung erfordern, stellen sie gleichwohl nicht sicher, dass das Rohrsystem auch noch bei höheren Betriebsdrücken und beim Durchsatz gasförmiger Medien mit geringer Leckrate verbindbar ist.

Die Erfindung hat sich deshalb die Aufgabe gestellt, ein Rohrsystem der eingangs näher bezeichneten Art so auszuführen, dass die Nachteile des beschriebenen Standes der Technik beseitigt sind und eine sehr rationell und wirtschaftlich herstellbare Rohrverbindung unabhängig von dem in dem Rohrsystem anliegenden Betriebsdruck eine sichere Abdichtung der Rohrverbindung gewährleistet. Eine dazu geeignete Rohrschelle soll darüber hinaus geeignet sein, Form- und Lageabweichungen der zu dem Rohrsystem gehörenden Rohre im Bereich der Rohrverbindung entgegenzuwirken.

Erfindungsgemäß wird die Aufgabe zunächst durch ein Rohrsystem gelöst, bei dem die Flansche einstückig jeweils an einer ersten Ringkante anschließende, radial nach außen gerichtete plane, kreisringförmige Dichtleisten aufweisen, dass die Dichtleisten unmittelbar oder mittelbar über eine Ringdichtung aneinander anliegen, dass der Außenrand der jeweiligen Dichtleiste an einer zweiten Ringkante in einen Spannring übergeht, der eine erste Spannfläche bildet, die mit einer keilförmigen zweiten Spannfläche an der Rohrschelle zusammenwirkt, und dass die Rohrschelle an ihren Spannflächen anschließende, zu der Rohrachse hin gerichtete kreisringförmige Distanzstege aufweist, deren ringförmige Innenkanten im gespannten Zustand der Rohrschelle sich den Mantelflächen der Rohrenden weitgehend annähern.

Zunächst sind bei dem erfindungsgemäßen Rohrsystem keinerlei separat angefertigte, mit dem Rohrsystem erst in einem speziellen Arbeitsgang zu verbindende Flanschen erforderlich, sondern diese werden unmittelbar aus den zu verbindenden Rohrenden abgeformt. Dabei genügt aber die komplette Rohrverbindung selbst ungewöhnlich hohen Anforderungen an eine langanhaltende, weitgehende Abdichtung des Rohrsystems und ist damit den ebenfalls recht wirtschaftlich herstellbaren Steckverbindungen oder ähnlichen einfachen Lösungen deutlich überlegen, bei denen die Leckrate von untergeordneter Bedeutung ist.

Das erfindungsgemäße Rohrsystem kann dabei in bevorzugter Weise so ausgeführt sein, dass der Spannring von der Dichtleiste als Ringkragen mit einem kreisring-ösenförmigen Querschnitt ausgebildet ist, an dem sich die erste Spannfläche befindet; stattdessen kann an den Rohrenden auch ein Ringkragen mit einem dreieckig-ösenförmigen Querschnitt ausgebildet sein. Beide Ausführungen sind gegebenenfalls mit der gleichen Rohrschelle kombinierbar. Sie stellen sicher, dass an den Stoßstellen der Rohrenden keine Bauelemente der Rohrverbindung in das von dem Innendurchmesser des Rohrsystems bestimmten Raum hineinragen und dadurch einen Strömungswiderstand bilden können. Vielmehr liegen die ersten, leicht gerundeten Kanten der Rohrenden nahe beieinander und verhindern so auch eine örtliche Verwirbelung eines durch das Rohrsystem fließenden Mediums.

Eine in Verbindung mit dem erfindungsgemäßen Rohrsystem vorteilhaft verwendbare Rohrschelle ist dadurch gekennzeichnet, dass sie einen etwa U-förmigen Querschnitt aufweist, dessen Schenkel von zwei im Querschnitt keilförmigen Spannflächen und an diese anschließenden Distanzstegen und dessen Basis von einer die Spannflächen verbindenden Ringfläche gebildet sind, wobei die ringförmigen Innenkanten der Distanzstege im gespannten Zustand der Rohrschelle sich den Mantelflächen der Rohrenden weitgehend annähern. Eine solche erfindungsgemäße Rohrschelle ist nicht nur sehr einfach herstellbar, sie dient nach ihrer Montage gleichzeitig der Verhinderung von Form- und Lageabweichungen der miteinander verbundenen Rohrenden, weil diese nur soweit aus ihrer Sollage auswandern können, wie das die Innenkanten der Distanzstege zulassen; je näher diese den Mantelflächen kommen, um so besser sind die Rohrenden gegenseitig ausgerichtet.

Eine derartige Rohrschelle ist mit einer Spanneinrichtung versehen, die entweder als Spannschloss ausgebildet oder mittels eines Spannhebels, einer Spannschraube oder dergleichen spannbar ist, sie zweigeteilt wobei dann beide Hälften durch ein lösbares Scharnier sowie ebenfalls durch die Spanneinrichtung miteinander verbunden sind.

Bei einer bevorzugten Ausbildung der erfindungsgemäßen Rohrschelle sind an diese zwei Laschen angeformt, die als Auflager für das mit der Rohrschelle bestückte Rohrsystem dienen, so dass zusätzliche Bauteile an dem Rohrsystem selbst entfallen und dieses an einem Auflager befestigbar oder auch hängend angeordnet sein kann.

Insgesamt ist durch die Erfindung ein Rohrsystem einschließlich einer deren einzelne Rohre an den Rohrenden verbindenden Rohschelle entstanden, wo, über eine Lösung zu der eigentlichen erfinderischen Aufgabenstellung einer wirtschaftlich herstellbaren und hochdichten Rohrverbindung hinaus, auch noch eine Möglichkeit geschaffen wird, Form- und Lageabweichungen der beteiligten Rohrenden zu verhindern und das Rohrsystem ohne zusätzlichen Aufwand räumlich festzulegen. Eine solche umfassende Funktion konnten die aus dem Stand der Technik bekannten Rohrsysteme nicht gewährleisten.

Anhand der Zeichnung wird nachstehend ein Ausführungsbeispiel der Erfindung näher beschrieben. Es zeigen
- Fig. 1: ein Rohrsystem nach der Erfindung im Längsschnitt und in räumlicher Darstellung,
- Fig. 2: eine Ansicht A aus Fig. 1, vergrößert,
- Fig. 3-5: einen Spannungsring an einem solchen Rohrsystem in einer ersten Ausführung und
- Fig. 6: eine zur Auflagerung geeignete Ausführung eines erfindungsgemäßen Rohrsystems,
in schematisch vereinfachter Darstellung.

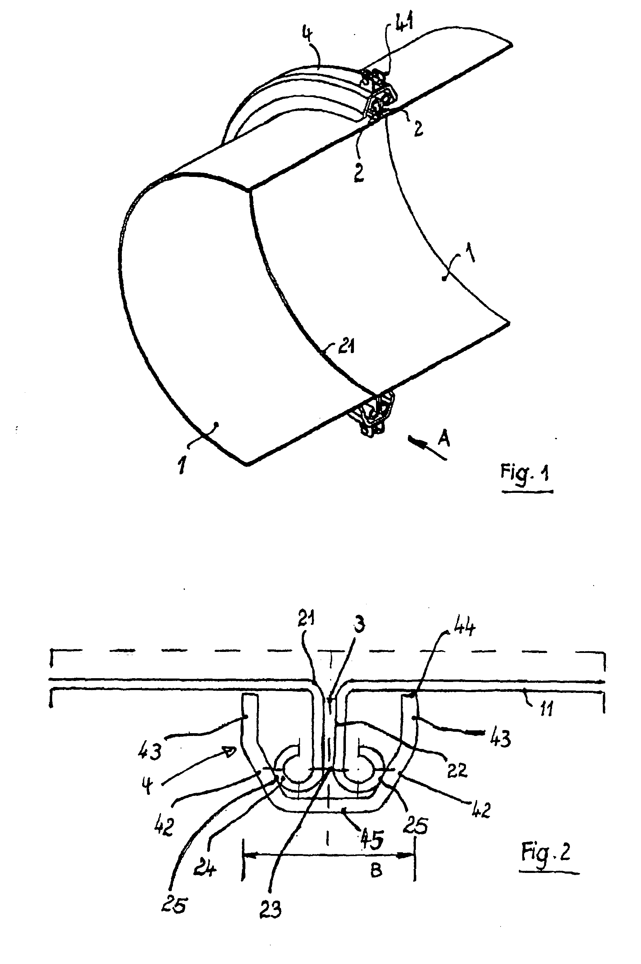

Das erfindungsgemäße Rohrsystem ist in den Fig. 1,2 mit seinen an einer Rohrverbindung beteiligten Rohrenden 1 dargestellt, die, stumpf aneinanderstoßend, jeweils mit einem angeformten Flansch 2 versehen sind. Die Flanschen 2 liegen mit an ihnen an einer ersten Ringkante 21 um 90° abgeformten, planen, kreisringförmigen Dichtleisten 22 aneinander, zwischen denen eine Ringdichtung 3 eingelegt ist, wie das ausführlich in der Fig. 2 dargestellt ist, und sind gemeinsam von einer Rohrschelle 4 überfangen, die in der Ausführung der Fig. 1 zweigeteilt ausgebildet ist und deren Hälften mittels zweier Spanneinrichtungen 41 (oder mittels einer Spanneinrichtung 41 und eines Scharniers) miteinander verbunden sind; selbstverständlich kann die Rohrschelle 4 auch einteilig gehalten sein. Die Spanneinrichtungen 41, von denen in Fig. 1 jeweils nur eine Hälfte zu erkennen ist, können mit einem jeweils zugehörigen Gegenstück beispielsweise mittels einer Spannschraube verbunden sein. Die Einzelheiten hierzu sind fachgemäß und deshalb in der Zeichnung nicht ausgeführt; in der Fig. 2 ist die gesamte Spanneinrichtung 41 weggelassen.

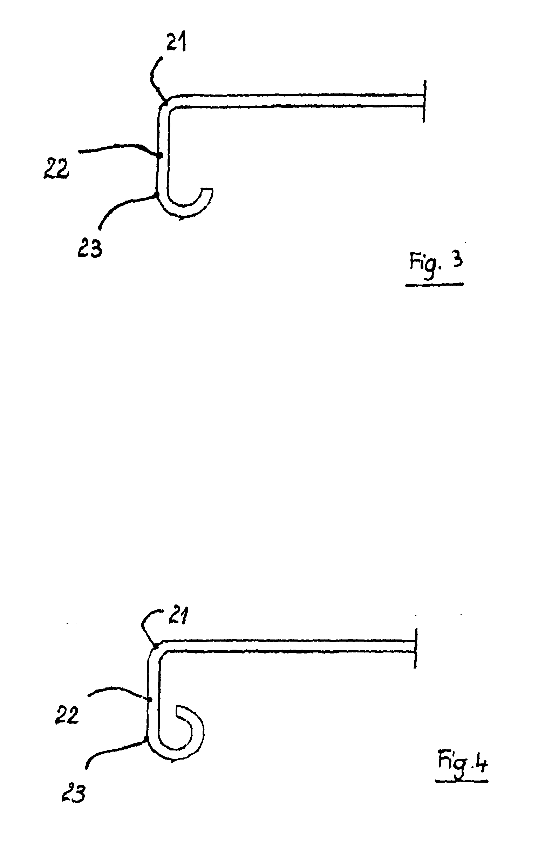

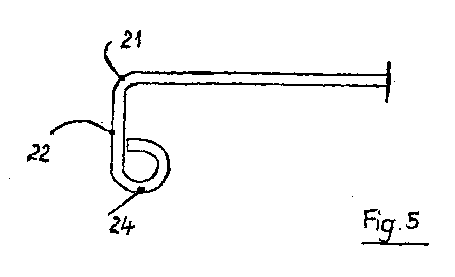

Die Flanschen 2 in der Ausführung der Fig. 2 sind jeweils mit einem von ihrer Dichtleiste 22 an einer zweiten Ringkante 23 ausgehenden Spannring 24 versehen, der als Ringkragen mit einem hier kreisring-ösenförmigen Querschnitt ausgebildet ist; die Fig. 3-5 verdeutlichen die einzelnen Phasen bei der Ausformung des Flansches 2 aus dem Rohrende 1 und insbesondere des Spannringes 24 zu einem fast völlig geschlossenen Ringkragen.

In der Fig. 2 ist die Rohrschelle 4 in ihrem etwa U-förmigen Querschnitt von der Breite B dargestellt. Die Schenkel dieses Querschnittes werden von zwei symmetrisch keilförmigen (zweiten) Spannflächen 42 gebildet, an die sich in Richtung auf die Rohrenden 1 jeweils ein Distanzsteg 43 anschließt, der in einer Innenkante 44 endet; die Innenkante 44 weist dementsprechend auf die Mantelfläche 11 des benachbarten Rohrendes 1 und ist deren Umfang parallel. Beide Schenkel sind durch eine Ringfläche 45 miteinander verbunden, der den Außendurchmesser der Rohrschelle 4 und damit der gesamten Rohrverbindung bildet.

Die Spannflächen 42 liegen bei geschlossener Rohrschelle 4 an einer an dem Spannring 24 befindlichen (ersten) Spannfläche 25 an, deren Form von der Art und Größe des Querschnittes des Spannringes 24 abhängt; beim Beispiel der Fig. 2 ist diese Spannfläche 25 fast zu einer Spannkante verengt. Beim Spannen der Rohrschelle 4 werden die Spannringe 24 hoch belastet, pressen die Dichtleisten 22 mit der Ringdichtung 3 aneinander und sorgen so für eine hochdichte Rohrverbindung. Gleichzeitig nähern sich die Innenkanten 44 der Mantelfläche 11 und verhindern zumindest in der Breite B der Rohrschelle 4 eine Form- und Lageabweichung der Rohrenden 1 und damit des gesamten Rohrsystems durch die Rohrverbindung, um so besser, je näher sie an die Mantelfläche 11 heranrücken.

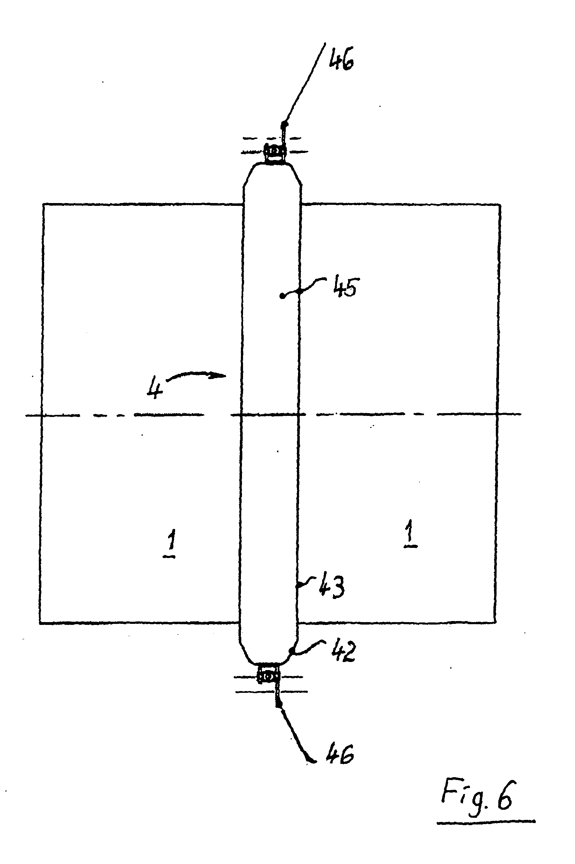

Eine weitere erfinderische Verbesserung des bisher beschriebenen Rohrsystems erläutert die Fig. 6. An einer wiederum zweigeteilten Rohrschelle 4 ist an deren Spanneinrichtungen 41 jeweils noch eine Lasche 46 vorgesehen, mit deren Hilfe das gesamte Rohrsystem aufgelagert und/oder orientiert werden kann, ohne dass dazu an anderer Stelle des Rohrsystems entsprechende Einrichtungen vorgesehen werden müssten.

### Bezugszeichenliste

- 1: Rohrende
- 11: Mantelfläche
- 2: Flansch
- 21: (erste) Ringkante
- 22: Dichtleiste
- 23: (zweite, sekundäre) Ringkante
- 24: Spannring
- 25: (erste) Spannfläche
- 3: Ringdichtung
- 4: Rohrschelle
- 41: Spanneinrichtung
- 42: (zweite) Spannfläche
- 43: Distanzsteg
- 44: Innenkante
- 45: Ringfläche
- 46: Lasche

- B: Breite

## Patentansprüche

1. Rohrsystem aus zumindest zwei miteinander verbundenen, insbesondere relativ dünnwandigen Rohren, an deren eine Rohrverbindung bildenden Rohrenden (1) jeweils ein Flansch (2) angeformt ist, wobei zwei aneinander liegende Flansche (2) miteinander mittels einer Rohrschelle (4) verspannbar sind, wobei
die Flansche (2) einstückig jeweils an einer ersten Ringkante (21) anschließende, radial nach außen gerichtete plane, kreisringförmige Dichtleisten (22) aufweisen, dass die Dichtleisten (22) unmittelbar oder mittelbar über eine Ringdichtung (3) aneinander anliegen, dass der Außenrand der jeweiligen Dichtleiste (22) an einer zweiten Ringkante (23) in einen Spannring (24) übergeht, der eine erste Spannfläche (25) bildet, die mit einer keilförmigen zweiten Spannfläche (42) an der Rohrschelle (4) zusammenwirkt,
**dadurch gekennzeichnet, dass**
die Rohrschelle (4) an ihren Spannflächen (42) anschließende, zu der Rohrachse hin gerichtete kreisringförmige Distanzstege (43) aufweist, deren ringförmige Innenkanten (44) im gespannten Zustand der Rohrschelle (4) sich den Mantelflächen (11) der Rohrenden (1) weitgehend annähern, wobei der Spannring (24) von der Dichtleiste (22) als Ringkragen mit einem kreisring-ösenförmigen Querschnitt ausgebildet ist, an dem sich die erste Spannfläche (25) befindet.

2. Rohrschelle für ein aus zwei miteinander verbundenen, insbesondere relativ dünnwandigen Rohren bestehendes Rohrsystem, an deren die Rohrverbindung bildenden Rohrenden (1) jeweils ein Flansch (2) angeformt ist, wobei die Rohrschelle (4) einen U-förmigen Querschnitt aufweist, dessen Schenkel von zwei im Querschnitt keilförmigen Spannflächen (42) und an diese anschließenden Distanzstegen (43) und dessen Basis von einer die Spannflächen (42) verbindenden Ringfläche (45) gebildet sind, wobei die ringförmigen Innenkanten (44) der Distanzstege (43) im gespannten Zustand der Rohrschelle (4) sich den Mantelflächen (11) der Rohrenden (1) weitgehend annähern,
**dadurch gekennzeichnet, dass** an ihr Laschen (46) angeformt sind, die in montiertem Zustand als Auflager für ein mit der Rohrschelle (4) bestücktes Rohrsystem dienen, wobei eine Spanneinrichtung (41) vorgesehen ist, die entweder als Spannschloss ausgebildet oder mittels eines Spannhebels, einer Spannschraube oder dergleichen spannbar ist, und wobei die Rohrschelle zweigeteilt ausgeführt ist und beide Hälften durch ein lösbares Scharnier sowie durch die Spanneinrichtung (41) miteinander verbunden sind.

## Claims

1. A pipe system including at least two relatively thin-walled pipe that are connected to each other, a flange (2) being conformed on the pipe ends (1) of which that form a connection, wherein two flanges (2) arranged adjacent one another are fastenable to each other with a pipe clamp (4), wherein
each of the flanges (2) has flat, circular raised faces (22), facing radially outwards and integrally adjoining a first ring edge (21), the raised faces (22) are positioned flush against each other directly or indirectly via a plugwasher (3), the outer edge of the respective raised face (22) transitions at a second ring edge (23) into a clamping ring (24) to form a first clamping surface (25), which cooperates with a wedge-shaped second clamping surface (42) on the pipe clamp (4),
**characterised in that**
the pipe clamp (4) is furnished with circular spacers (43) following on from its clamping surfaces (42) and oriented towards the pipe axis, the annular inner edges (44) of which spacers largely match the peripheral surfaces (11) of the pipe ends (1) when the pipe clamp (4) is under tension, wherein the clamping ring (24) is conformed from the raised face (22) as an annular collar having an annular, loop shaped cross section.

2. A pipe clamp for a pipe system made up of two in particular relatively thin-walled pipes that are connected together, in which a flange (2) is conformed on each of the pipe ends (1) of which that form a connection, wherein the pipe clamp (4) has a U-shaped cross-section, the legs of which being formed from two clamping surfaces (42) with conical cross-section, and spacers (43) following on therefrom, and the base being formed from an annular surface (45) that connects the clamping surfaces (42), wherein the annular inner edges (44) of the spacers (43) largely match the peripheral surfaces (11) of the pipe ends (1) when the pipe clamp (4) is under tension,
**characterised in that**
lugs (46) are conformed thereon that serve as a support for a pipe system equipped with the pipe clamp (4), wherein
a clamping device (41) is provided that is either in the form of a tightener or can be tightened via a clamping lever, a clamping screw or similar and wherein the pipe clamp is designed in two parts, and both halves are connected to each other via a releasable hinge and via the clamping device (41).

## Revendications

1. Système de tubes constitué d'au moins deux tubes reliés entre eux, en particulier à parois relativement minces, sur les extrémités tubulaires (1) desquels est formée respectivement une collerette (2), deux collerettes adjacentes l'une à l'autre (2) pouvant subir la tension au moyen d'une collier d'attache (4), les collerettes (2) d'un seul tenant présentant à chaque fois des rebords d'étanchéité (22) plans, en forme d'anneau circulaire, dirigés radialement vers l'extérieur, se raccordant à un premier bord annulaire (21), de sorte que les rebords d'étanchéité (22) sont appliqués l'un sur l'autre directement ou indirectement par un joint d'étanchéité annulaire (3), que le bord extérieur du rebord d'étanchéité (22) respectif se transforme en une bague de serrage (24) au niveau d'un deuxième bord annulaire (23), qui forme une première surface de serrage (25), qui agit de concert avec une deuxième surface de serrage (42) en forme de coin, sur le collier d'attache (4),
**caractérisé en ce que**,
le collier d'attache (4) pour tubes présente des entretoises (43) en forme d'anneaux de cercle dirigés vers l'axe du tube, se raccordant à ses surfaces de serrage (42), dont les bords intérieurs (44) en forme d'anneaux dans l'état serré du collier d'attache (4) pour tubes s'approchent en grande partie de la surface latérale (11) des extrémités tubulaires (1), la bague de serrage (24) du rebord d'étanchéité (22) est formée en tant que collet annulaire ayant une section en forme d'oeillet d'anneau circulaire, sur laquelle se trouve la première surface de serrage (25).

2. Collier d'attache pour tubes, destiné à un système de tubes constitué de deux tubes reliés entre eux, en particulier à parois relativement minces, sur les extrémités tubulaires (1) desquels est formée respectivement une collerette (2), formant le raccordement tubulaire, le collier d'attache (4) pour tubes présentant une section en forme de U, dont les branches sont formées par deux surfaces de serrage (42) en forme de coin en section, et des entretoises (43) se raccordant à celles-ci et dont la base est formée par une surface annulaire (45) reliant les surfaces de serrage (42), les bords intérieurs (44) de forme annulaire des entretoises (43) dans l'état serré du collier d'attache (4) pour tubes s'approchent en grande partie des surfaces latérales (11) des extrémités tubulaires (1),
**caractérisé en ce que**
des languettes (46) sont formées sur lui, lesquelles servent de support à l'état monté pour un système de tubes équipé du collier d'attache (4) pour tubes, dans lequel un dispositif de serrage (41) est prévu, qui est formé en tant que manchon de serrage, ou bien qui peut être serré au moyen d'un levier de serrage, une vis de serrage, ou analogue, et dans lequel le collier est réalisé en deux pièces et que les deux pièces sont reliées l'une à l'autre par une charnière détachable ainsi que par le dispositif de serrage (41).
